# EUROPEAN PATENT SPECIFICATION

(11) **EP 3 567 658 B1**
(45) Date of publication and mention of the grant of the patent: **30.12.2020**
(21) Application number: 19165390.6
(22) Date of filing: 27.03.2019
(51) Int. Cl.: H01M 4/131, H01M 4/1391, H01M 4/485, H01M 4/505, H01M 4/525, H01M 10/0525, H01M 4/02

(54) **DOPED LITHIUM POSITIVE ELECTRODE ACTIVE MATERIAL AND PROCESS FOR MANUFACTURE THEREOF**
DOTIERTES LITHIUM POSITIVELEKTRODEN-AKTIVMATERIAL UND VERFAHREN ZUR HERSTELLUNG DAVON
MATÉRIAU ACTIF D'ÉLECTRODE POSITIVE DOPÉE AU LITHIUM ET SON PROCÉDÉ DE FABRICATION

(30) Priority: 09.05.2018 DK PA201800207; 05.12.2018 DK PA201800959
(43) Date of publication of application: 13.11.2019
(73) Proprietor: Haldor Topsøe A/S, 2800 Kgs. Lyngby (DK)
(72) Inventor: HØJBERG, Jonathan, 2880 Bagsvaerd (DK); HØJ, Jakob Weiland, 2820 Gentofte (DK); DAHL, Søren, 3400 Hillerød (DK); ELKJAER, Christian Fink, 3460 Birkerød (DK)
(74) Representative: Haldor Topsøe A/S

(56) References cited:
- EP-A1- 2 789 585
- US-A1- 2017 133 675
- US-A1- 2017 155 146

## Description

### FIELD OF THE INVENTION

Embodiments of the invention generally relate to a lithium positive electrode active material, to a process for preparing a lithium positive electrode active material and to a secondary battery comprising the lithium positive electrode active material.

### BACKGROUND

Developing high energy density rechargeable battery materials have become a major research topic due to their broad applications in electric vehicles, portable electronics and grid-scale energy storage. Since their first commercialization in the early 1990s, Li-ion batteries (LIBs) present many advantages with respect to other commercial battery technologies. In particular, their higher specific energy and specific power make LIBs the best candidate for electric mobile transport application.

Document US 2017/155146 A1 discloses a positive electrode active material for a lithium ion battery, the active material being a secondary particle comprising primary particles of a lithium composite metal oxide that contains nickel, cobalt, and manganese, with more than 50 at% Mn; and wherein the primary particle is doped with one or more dopants selected from Nb, Sn, Mo, and Ta. The dopant element content being higher in a surface region of the primary particle than in the interior of the primary particle.

EP 2 789 585 A1 discloses a cathode active material of a lithium secondary battery comprising a metal oxide represented by the chemical formula: LiₐNiₓCo_{y}M_{z}O₂, wherein M is selected from Al, Mg, Ti, Ga and In, and M has a concentration gradient at which a concentration is decreased from a surface of M toward a center thereof.

US 2017/133675 A1 discloses a particulate precursor compound for manufacturing a lithium transition metal oxide powder as an active positive electrode material in lithium-ion batteries (LNMCO), wherein (M) is NiₓMn_{y}Co_{z}Aᵥ, A being a dopant selected from Al, Ga, B, Ti, Mg, W, Zr, Cr and V.

It is an object of the present invention to provide a lithium positive electrode active material having low degradation and maintaining high capacity.

### SUMMARY OF THE INVENTION

Embodiments of the invention generally relate to a lithium positive electrode active material, to a process for preparing a lithium positive electrode active material and to a secondary battery comprising the lithium positive electrode active material One aspect of the invention relates to a lithium positive electrode active material comprising at least 95 wt% spinel having a chemical composition of LiₓNi_{y}Mn_{2-y-z1-z2}D1_{z1}D2_{z2}O₄, wherein 0.9≤ x ≤ 1.1, 0.4≤y≤0.5, 0.005 ≤ z1 ≤ 0.2, 0 ≤ z2 ≤ 0.2. wherein D1 is a dopant chosen between the following elements: Co, Cu, Ti, Zn, Mg, Fe or combinations thereof,wherein D2 is a dopant chosen between Cu, Ti, Zn, Mg, Fe or combinations thereof, and D1 and D2 are different dopants. The lithium positive electrode active material is a powder composed of material particles, wherein the distribution of dopant D1 is non-uniform along a radial axis of the material particles and wherein the distribution of the dopant D2 is uniform along the radial axis of the material particles.
When the distribution of the dopant D1 is non-uniform along the radial axis of the material particles, it becomes possible to utilize ess dopant but still obtain the effect of the dopant. When the dopant D1 is e.g. Co, the dopant assists in reducing the degradation of the lithium positive electrode active material. Often doping of a material with a stabilizing dopant reduces the capacity of the lithium positive electrode active material; however, when the amount of the dopant is reduced, this leads to a reduction in the overall capacity of the lithium positive electrode active material. Thereby, the capacity fading during cycling is reduced by the material of the invention compared to a similar LNMO material without doping (viz. z1 = z2 = 0 in the formula above), whilst the capacity of the lithium positive electrode active material is close to the capacity of the similar LNMO material. In total the capacity fading at room temperature and at 55°C is less than 2% with the lithium positive electrode active material of the invention.

The term "non-uniform distribution of D1" is meant to denote that the concentration of the dopant D1 at one part of the particles is different from the concentration of the dopant D1 at other parts of the particles. For instance, the concentration of the dopant D1 at a central part of the particles is different from the concentration of the dopant D1 at a surface part of the particles.

The values of z1 and z2 are given above for the chemical composition of the spinel. Since D1 is non-uniformly distributed throughout the particles, z1 is relatively low; however, the local distribution of D1 may be rather high. Thus, if D1 is mainly at a narrow surface layer, D1 may be a relatively large part of the surface of the particles.

The net chemical composition is a composition for all the lithium positive electrode active material. Thus, the lithium positive electrode active material may comprise impurities having another formula than LiₓNi_{y}Mn_{2-y-z1-z2}D1_{z1}D2_{z2}O_{4-δ}, -(0.5-y)<δ<0.1, wherein 0.9≤ x ≤ 1.1, 0.4≤y≤0.5, 0.005 ≤ z1 ≤ 0.2, 0 ≤ z2 ≤ 0.2. wherein D1 is a dopant chosen between the following elements: Co, Cu, Ti, Zn, Mg, Fe or combinations thereof, wherein D2 is a dopant chosen between Cu, Ti, Zn, Fe or combinations thereof, and D1 and D2 are different dopants. A formula covering a net chemical composition for all the lithium positive electrode active material may be written as: LiₓNi-_{y}Mn_{2-y-z1-z2}D1_{z1}D2_{z2}O_{4-δ}, -(0.5-y)<δ<0.1, wherein 0.9≤ x ≤ 1.1, 0.4≤y≤0.5, 0.005 ≤ z1 ≤ 0.2, 0 ≤ z2 ≤ 0.2. wherein D1 is a dopant chosen between the following elements: Co, Cu, Ti, Zn, Mg, Fe or combinations thereof, wherein D2 is a dopant chosen between Cu, Ti, Zn, Mg, Fe or combinations thereof, and D1 and D2 are different dopants.

Preferable values of lies in the range from 0.43 to 0.49, and even more preferably values of y lies in the range from 0.45 to 0.47, in that these values of y provides an advantageous compromise between Ni activity, which increases with increased values of y, and the risk of ordering the material, which risk decreases with increased values of y. In an embodiment, the material particles of said lithium positive electrode active material are primary particles, where the primary particles form secondary particles, wherein at least 95% of the primary particles have a diameter or a volume equivalent diameter of between 100 nm and 2 µm and where at least 95% of the secondary particles have a diameter or volume equivalent diameter of between 1 µm and 25 µm. Thus, in this embodiment, the term "material particles" is meant to denote "primary particles". Thus, the distribution of the dopant D1 is non-uniform along the radial axis of the primary particles. For example, the dopant material D1 is more concentrated on the surface of the primary particles and gradually decreases toward the core of the primary particles or the dopant D1 may be mostly at the surface of the primary particles in a shell-configuration. An average diameter or average volume equivalent diameter of the primary particles is e.g. about 250 nm. As used herein, the term "volume equivalent diameter" of an irregularly shaped object is the diameter of a sphere of equivalent volume.

In an embodiment, the primary particles of the lithium positive electrode active material are surface modified with the dopant D1. Thus, the dopant D1 is mainly at the surface of the primary particles.

In an embodiment, the dopant D1 is present in the outermost 20%of the primary particles. Thus, the concentration of the dopant D1 decreases from the outer surface of the primary particles towards the core thereof and the concentration of the dopant D1 is very low or zero at a distance from the surface, the distance from the surface being about 20% of the distance from the surface to the center of the particle. In a case, where the primary particles are not circular, the term "center" is to be seen as the geometric center or the center of mass. Since the density of the primary particles is substantially uniform, the geometric center is substantially the same as the center of mass of the primary particles.

In an embodiment, the lithium positive electrode active material is a spinel and wherein the dopant D1 is part of the spinel. Being part of the spinel means that the atoms of the dopant D1 take the place of elements that were in the crystal lattice or crystal structure of the lithium positive electrode material.

In an embodiment, the material particles of the lithium positive electrode active material are secondary particles made up of primary particles, wherein the diameter or the volume equivalent diameter of the primary particles is between 100 nm and 2 µm and where the diameter or the volume equivalent diameter of the secondary particles is between 1 µm and 25 µm. These values of volume equivalent diameter of the primary particles are as measured by SEM or Rietveld refinement of XRD measurements. As used herein, the term "volume equivalent diameter" of an irregularly shaped object is the diameter of a sphere of equivalent volume.

Thus, in this embodiment, the term "material particles" is meant to denote "secondary particles". Thus, the distribution of the dopant D1 is non-uniform along the radial axis of the secondary particles. For example, the dopant material D1 is more concentrated on the surface of the secondary particles and gradually decreases toward the core of the secondary particle or the dopant D1 may be mostly at the surface of the secondary particles in a shell-configuration. An average diameter or average volume equivalent diameter of the primary particles is e.g. 250 nm based upon Rietveld refinement of XRD measurements.

In an embodiment, the secondary particles of the lithium positive electrode active material are surface modified with the dopant D1. Thus, the dopant D1 is mainly at the surface of the secondary particles.

In an embodiment, the dopant D1 is present in the outermost 20%of the secondary particles. Thus, the concentration of the dopant D1 decreases from the outer surface of the secondary particles towards the core thereof and the concentration of the dopant D1 is very low or zero at a distance from the surface, the distance from the surface being about 20% of the distance from the surface to the center of the secondary particle. In a case, where the secondary particles are not circular, the term "center" is to be seen as the geometric center or the center of mass. Since the density of the secondary particles is substantially uniform, the geometric center is substantially the same as the center of mass of the secondary particles.

In an embodiment, the lithium positive electrode active material is a spinel and wherein the dopant D1 is part of the spinel. Again, being part of the spinel means that the atoms of the dopant D1 take the place of elements that were in the crystal lattice or crystal structure of the lithium positive electrode material.

In an embodiment, the lithium positive electrode active material is cation disordered. This means that the lithium positive electrode active material is a disordered space group, e.g. Fd3m. A disordered material has the advantage of having high stability in terms of low fade rate. The symmetry of the spinel lattice is described by space groups of P4₃32 for the cation ordered phase and Fd-3m for the cation disordered phase with a lattice constant *a* at around 8.2 Å. Spinel material may be a single disordered or ordered phase, or a mix of both. Adv. Mater. (2012) 24, pp 2109-2116.

In an embodiment, the lithium positive electrode active material comprises at least 95 wt% spinel phase.

In an embodiment, the lithium positive electrode active material has a tap density of at least 1.9 g/cm³. The tap density is preferably equal to or greater than 2.0 g/cm³; equal to or greater than 2.2 g/cm³; equal to or greater than 2.4 g/cm³; or equal to or greater than 2.6 g/cm³. For most battery applications, space is at a premium, and high energy density is desired. Powders of the electrode material with a high tap density tend to result in electrodes with higher active material loading (and thus higher energy density) than powders with a low tap density. It can be shown using geometry-based arguments that materials composed of spherical particles have a higher theoretical tap density than particles with irregular shapes. A higher tap density provides possibility to obtain higher volumetric electrode loading and thus a higher volumetric energy density of batteries containing materials with a high tap density.

In general, the term "tap density" is used to describe the bulk density of a powder (or granular solid) after consolidation/compression prescribed in terms of 'tapping' the container of powder a measured number of times, usually from a predetermined height. The method of 'tapping' is best described as 'lifting and dropping'. Tapping in this context is not to be confused with tamping, side-ways hitting or vibration. The method of measurement may affect the tap density value and therefore the same method should be used when comparing tap densities of different materials. The tap densities of the present invention are measured by weighing a measuring cylinder before and after addition of at least 10 g of powder to note the mass of added material, then tapping the cylinder on the table for some time and then reading of the volume of the tapped material. Typically, the tapping should continue until further tapping would not provide any further change in volume. As an example only, the tapping may be about 120 or 180 times, carried out during a minute.

In an embodiment, the BET surface area of the secondary particles is below 0.25 m²/g. The BET surface may be down to about 0.15 m²/g. It is advantageous that the BET surface area is low since a low BET surface area correspond to a dense material with a low porosity. Since degradation reactions occur on the surface of the material, such a material typically is a stable material. The undoped LNMO material is a low surface LNMO material, in terms of BET surface area, which is advantageous to obtain the good performance of the lithium positive electrode active material of the invention. The doped LNMO material retain the stable characteristics of the undoped LNMO material and is improved further in relation to stability during charge/discharge.

In an embodiment, the secondary particles are characterized by an average circularity higher than 0.75 and simultaneously an average aspect ratio lower than 1.50. Preferably, the average aspect ratio is lower than 1.2 whilst the average circularity is higher than 0.75. There are several ways to characterize and quantify the circularity or sphericity and shape of particles. Almeida-Prieto et al. in J. Pharmaceutical Sci., 93 (2004) 621, lists a number of form factors that have been proposed in the literature for the evaluation of sphericity: Heywood factors, aspect ratio, roughness, pellips, rectang, modelx, elongation, circularity, roundness, and the Vp and Vr factors proposed in the paper. Circularity of a particle is defined as 4·π·(Area)/(Perimeter)², where the area is the projected area of the particle. An ideal spherical particle will thus have a circularity of 1, while particles with other shapes will have circularity values between 0 and 1. Particle shape can further be characterized using aspect ratio, defined as the ratio of particle length to particle breadth, where length is the maximum distance between two points on the perimeter and breadth is the maximum distance between two perimeter points linked by a line perpendicular to length.

The advantage of a material with a circularity above 0.7 and an aspect ratio below 1.5 is the stability of the material due to the low surface area thereof.

In an embodiment, D50 of the secondary particles is between 3 and 50 µm, preferably between 5 and 25 µm. This is advantageous in that such particle sizes enable easy powder handling and low surface area, while maintaining sufficient surface to transport lithium in and out of the structure during discharge and charge.

One way to quantify the size of particles in a slurry or a powder is to measure the size of a large number of particles and calculate the characteristic particle size as a weighted mean of all measurements. Another way to characterize the size of particles is to plot the entire particle size distribution, i.e. the volume fraction of particles with a certain size as a function of the particle size. In such a distribution, D10 is defined as the particle size where 10% of the population lies below the value of D10, D50 is defined as the particle size where 50% of the population lies below the value of D50 (i.e. the median), and D90 is defined as the particle size where 90% of the population lies below the value of D90. Commonly used methods for determining particle size distributions include laser diffraction measurements and scanning electron microscopy measurements, coupled with image analysis.

In an embodiment, the distribution of the agglomerate size of the secondary particles is characterized in that the ratio between D90 and D10 is smaller than or equal to 4. This corresponds to a narrow size distribution. Such a narrow size distribution, preferably in combination with D50 of the secondary particles being between 3 and 50 µm, indicates that the lithium positive electrode material has a low number of fines and thus a low surface area. In addition, a narrow particle size distribution ensures the electrochemical response of all the secondary particles of the lithium positive electrode material will be essentially the same so that stressing a fraction of the particles more than the rest is avoided.

In an embodiment, the capacity of the lithium positive electrode active material is above 120 mAh/g. This is measured at least at a discharge current of 30 mA/g. Preferably the capacity of the lithium positive electrode active material is above 130 mAh/g at a current of 30 mA/g. Discharge capacities and discharge currents in this document are stated as specific values based on the mass of the active material.

In an embodiment, the separation between the two Ni-plateaus around 4.7 V of the lithium positive electrode active material is at least 50 mV. A preferred value of the plateau separation is about 60 mV. The plateau separation is a measure of the energies related to insertion and removal of lithium at a given state of charge and this is influenced by the choice and amount of dopant and whether the spinel phase is disordered or ordered. Without being bound by theory, a plateau separation of at least 50 mV seems advantageous since this occurs to be related to whether the that the lithium positive electrode active material is in an ordered or a disordered phase. The plateau separation is e.g. 60 mV, and a maximum value is about 100 mV.

According to another aspect, the invention relates a process for preparing a lithium positive electrode active material comprising at least 95 wt% spinel having a chemical composition of LiₓNi_{y}Mn_{2-y-z1-z2}D1_{z1}D2_{z2}O₄, wherein 0.9≤ x ≤ 1.1, 0.4≤y≤0.5, 0.005 ≤ z1 ≤ 0.2 and 0.0 ≤ z2 ≤ 0.2, wherein D1 is a dopant chosen between the following elements: Co, Cu, Ti, Zn, Mg, Fe or combinations thereof, wherein D2 is a dopant chosen between Cu, Ti, Zn, Mg, Fe or combinations thereof, where D1 and D2 are different dopants and the lithium positive electrode active material is composed of material particles, wherein the distribution of dopant D1 is non-uniform along a radial axis of the material particles and wherein the distribution of dopant D2 is uniform along the radial axis of the material particles. The process comprises the steps of:
a) providing a lithium positive electrode active material comprising at least 95 wt% spinel having a chemical composition of LiₓNi_{y}Mn_{2-y-z2}D2_{z2}O₄, wherein 0.9≤ x ≤ 1.1, 0.4≤y≤0.5, and 0 ≤ z2 ≤ 0.2,
b) mixing the lithium positive electrode active material of step a) with a dopant precursor of the dopant D1,
c) heating the mixture of step b) to a temperature of between 300°C and 700°C.

A method of providing a lithium positive electrode active material is for example as described in the patent application WO17032789 A1.

In an embodiment, the temperature of step c) and the duration in time of step c) are controlled so as to prevent uniform distribution of the dopant D1 throughout the lithium positive electrode material. For relatively short durations of time of step c) the temperature of step c) should be relatively higher, whilst for relatively long durations of time of step c) the temperature of step c) should be relatively lower.

A third aspect of the invention relates to a secondary battery comprising a positive electrode which comprises the lithium positive electrode active material according to any of the invention.

## Claims

1. A lithium positive electrode active material comprising at least 95 wt% spinel having a chemical composition of LiₓNi_{y}Mn_{2-y-z1-z2}D1_{z1}D2_{z2}O₄, wherein 09≤ x ≤ 1.1, 0.4≤y≤0.5, 0.005 ≤ z1 ≤ 0.2, 0 ≤ z2 ≤ 0.2, wherein D1 is a dopant chosen between the following elements: Co, Cu, Ti, Zn, Mg, Fe or combinations thereof, wherein D2 is a dopant chosen between Cu, Ti, Zn, Mg, Fe or combinations thereof, where D1 and D2 are different dopants, wherein the lithium positive electrode active material is a powder composed of material particles, wherein the distribution of dopant D1 is non-uniform along a radial axis of the material particles and wherein the distribution of the dopant D2 is uniform along the radial axis of the material particles.

2. A lithium positive electrode active material according to claim 1, wherein said material particles of said lithium positive electrode active material are primary particles, where the primary particles form secondary particles, wherein at least 95% of the primary particles have a diameter or a volume equivalent diameter of between 100 nm and 2 µm and where at least 95% of the secondary particles have a diameter or volume equivalent diameter of between 1 µm and 25 µm.

3. A lithium positive electrode active material according to claim 2, wherein the primary particles of the lithium positive electrode active material are surface modified with the dopant D1.

4. A lithium positive electrode active material according to any of the claims 2 to 3, wherein the dopant D1 is present in the outermost 20% of the primary particles.

5. A lithium positive electrode active material according any of the claim 2 to 4, wherein the dopant D1 is part of the spinel.

6. A lithium positive electrode active material according to claim 1, wherein said material particles of said lithium positive electrode active material are secondary particles made up of primary particles, wherein the diameter or the volume equivalent diameter of the primary particles is between 100 nm and 2 µm and where the diameter or the volume equivalent diameter of the secondary particles is between 1 µm and 25 µm.

7. A lithium positive electrode active material according to claim 6, wherein
the secondary particles of the lithium positive electrode active material are surface modified with the dopant D1.

8. A lithium positive electrode active material according to any of the claims 6 or 7, wherein the dopant D1 is present in the outermost 20%of the secondary particles.

9. A lithium positive electrode active material according any of the claim 6 to 8, wherein the dopant D1 is part of the spinel.

10. A lithium positive electrode active material according any of the claim 1 to 9, wherein the oxidation state of the dopant D1 is larger than 2.

11. A lithium positive electrode active material according any of the claim 1 to 10, wherein said lithium positive electrode active material is cation disordered.

12. A lithium positive electrode active material according any of the claim 1 to 11, wherein said lithium positive electrode active material has a tap density of at least 1.9 g/cm³.

13. A lithium positive electrode active material according to any of the claims 1 to 12, wherein the BET surface area of the secondary particles is below 0.25 m²/g.

14. A lithium positive electrode active material according to any of the claims 2 to 13, wherein the secondary particles are **characterized by** an average circularity higher than 0.90 and simultaneously an average aspect ratio lower than 1.50.

15. A lithium positive electrode active material according to any of the claims 2 to 14, wherein D50 of the secondary particles is between 3 and 50 µm, preferably between 8 and 40 µm.

16. A lithium positive electrode active material according to claim 15, wherein the distribution of the agglomerate size of the secondary particles is **characterized in that** the ratio between D90 and D10 is smaller than or equal to 4.

17. A lithium positive electrode active material according to any of the claims 1 to 16, wherein the capacity of the lithium positive electrode active material is above 120 mAh/g.

18. A lithium positive electrode active material according to any of the claims 1 to 17, wherein the separation between the two Ni-plateaus around 4.7 V of the lithium positive electrode active material is at least 50 mV.

19. A process for preparing a lithium positive electrode active material comprising at least 95 wt% spinel having a chemical composition of LiₓNi_{y}Mn_{2-y-z1-z2}D1_{z1}D2_{z2}O₄, wherein 0.9≤ x ≤ 1.1, 0.4≤y≤0.5, 0.005 ≤ z1 ≤ 0.2 and 0.0 ≤ z2 ≤ 0.2, wherein D1 and D2 are dopants chosen between the following elements: Co, Cu, Ti, Zn, Mg, Fe or combinations thereof, where D1 and D2 are different dopants, wherein the lithium positive electrode active material is composed of material particles, wherein the distribution of dopant D1 is non-uniform along a radial axis of the material particles and wherein the distribution of dopant D2 is uniform along the radial axis of the material particles, said process comprising the steps of:
a) providing a lithium positive electrode active material comprising at least 95 wt% spinel having a chemical composition of LiₓNi_{y}Mn_{2-y-z2}D2_{z2}O₄, wherein 09≤ x ≤ 1.1, 0.4≤y≤0.5, and 0 ≤ z2 ≤ 0.2,
b) mixing the lithium positive electrode active material of step a) with a dopant precursor of the dopant D1,
c) heating the mixture of step b) to a temperature of between 300°C and 700°C.

20. A process according to claim 19, wherein the temperature of step c) and the duration in time of step c) are controlled so as to prevent uniform distribution of the dopant D1 throughout the lithium positive electrode material.

21. A secondary battery comprising a positive electrode which comprises the lithium positive electrode active material according to any of the claims 1 to 18.

## Patentansprüche

1. Lithiumpositivelektroden-Aktivmaterial, umfassend mindestens 95 Gew.-% Spinell mit einer chemischen Zusammensetzung von LiₓNi_{y}Mn_{2-y-z1-z2}D1_{z1}D2_{z2}O₄, wobei 0,9 ≤ x ≤ 1,1, 0,4 ≤ y ≤ 0,5, 0,005 ≤ z1
≤ 0,2, 0 ≤ z2 ≤ 0,2 ist, wobei D1 ein Dotierstoff ist, der aus den folgenden Elementen gewählt wurde: Co, Cu, Ti, Zn, Mg, Fe oder Kombinationen davon, wobei D2 ein Dotierstoff ist, der aus Cu, Ti, Zn, Mg, Fe oder Kombinationen davon gewählt wurde, wobei D1 und D2 unterschiedliche Dotierstoffe sind, wobei das Lithiumpositivelektroden-Aktivmaterial ein Pulver ist, das aus Materialteilchen zusammengesetzt ist, wobei die Verteilung des Dotierstoffs D1 entlang einer radialen Achse der Materialteilchen ungleichmäßig ist und wobei die Verteilung des Dotierstoffs D2 entlang der radialen Achse der Materialteilchen gleichmäßig ist.

2. Lithiumpositivelektroden-Aktivmaterial gemäß Anspruch 1, wobei die Materialteilchen des Lithiumpositivelektroden-Aktivmaterials Primärteilchen sind, wobei die Primärteilchen Sekundärteilchen bilden, wobei mindestens 95 % der Primärteilchen einen Durchmesser oder einen volumenäquivalenten Durchmesser zwischen 100 nm und 2 µm haben und wobei mindestens 95 % der Sekundärteilchen einen Durchmesser oder volumenäquivalenten Durchmesser zwischen 1 µm und 25 µm haben.

3. Lithiumpositivelektroden-Aktivmaterial gemäß Anspruch 2, wobei die Primärteilchen des Lithiumpositivelektroden-Aktivmaterials mit dem Dotierstoff D1 oberflächenmodifiziert sind.

4. Lithiumpositivelektroden-Aktivmaterial gemäß einem der Ansprüche 2 bis 3, wobei der Dotierstoff D1 in den äußersten 20 % der Primärteilchen vorhanden ist.

5. Lithiumpositivelektroden-Aktivmaterial gemäß einem der Ansprüche 2 bis 4, wobei der Dotierstoff D1 Teil des Spinells ist.

6. Lithiumpositivelektroden-Aktivmaterial gemäß Anspruch 1, wobei die Materialteilchen des Lithiumpositivelektroden-Aktivmaterials Sekundärteilchen sind, die aus Primärteilchen gebildet sind, wobei der Durchmesser oder der volumenäquivalente Durchmesser der Primärteilchen zwischen 100 nm und 2 µm liegt und wobei der Durchmesser oder der volumenäquivalente Durchmesser der Sekundärteilchen zwischen 1 µm und 25 µm liegt.

7. Lithiumpositivelektroden-Aktivmaterial gemäß Anspruch 6, wobei die Sekundärteilchen des Lithiumpositivelektroden-Aktivmaterials mit dem Dotierstoff D1 oberflächenmodifiziert sind.

8. Lithiumpositivelektroden-Aktivmaterial gemäß einem der Ansprüche 6 oder 7, wobei der Dotierstoff D1 in den äußersten 20 % der Sekundärteilchen vorhanden ist.

9. Lithiumpositivelektroden-Aktivmaterial gemäß einem der Ansprüche 6 bis 8, wobei der Dotierstoff D1 Teil des Spinells ist.

10. Lithiumpositivelektroden-Aktivmaterial gemäß einem der Ansprüche 1 bis 9, wobei die Oxidationsstufe des Dotierstoffs D1 größer als 2 ist.

11. Lithiumpositivelektroden-Aktivmaterial gemäß einem der Ansprüche 1 bis 10, wobei das Lithiumpositivelektroden-Aktivmaterial Kationen-fehlgeordnet ist.

12. Lithiumpositivelektroden-Aktivmaterial gemäß einem der Ansprüche 1 bis 11, wobei das Lithiumpositivelektrode-Aktivmaterial eine Klopfdichte von mindestens 1,9 g/cm³ hat.

13. Lithiumpositivelektroden-Aktivmaterial gemäß einem der Ansprüche 1 bis 12, wobei die BET-Oberfläche der Sekundärteilchen unter 0,25 m²/g liegt.

14. Lithiumpositivelektroden-Aktivmaterial gemäß einem der Ansprüche 2 bis 13, wobei die Sekundärteilchen durch eine mittlere Rundheit von mehr als 0,90 und gleichzeitig durch ein mittleres Seitenverhältnis von weniger als 1,50 gekennzeichnet sind.

15. Lithiumpositivelektroden-Aktivmaterial gemäß einem der Ansprüche 2 bis 14, wobei der D50 der Sekundärteilchen zwischen 3 und 50 µm, bevorzugt zwischen 8 und 40 µm, liegt.

16. Lithiumpositivelektroden-Aktivmaterial gemäß Anspruch 15, wobei die Verteilung der Agglomeratgröße der Sekundärteilchen **dadurch gekennzeichnet ist, dass** das Verhältnis zwischen D90 und D10 kleiner oder gleich 4 ist.

17. Lithiumpositivelektroden-Aktivmaterial gemäß einem der Ansprüche 1 bis 16, wobei die Kapazität des Lithiumpositivelektroden-Aktivmaterials über 120 mAh/g beträgt.

18. Lithiumpositivelektroden-Aktivmaterial gemäß einem der Ansprüche 1 bis 17, wobei der Abstand zwischen den beiden Ni-Plateaus bei etwa 4,7 V des Lithiumpositivelektroden-Aktivmaterial mindestens 50 mV beträgt.

19. Verfahren zur Herstellung eines Lithiumpositivelektroden-Aktivmaterials, umfassend mindestens 95 Gew.-% Spinell mit einer chemischen Zusammensetzung von LiₓNi_{y}Mn_{2-y-z1-z2}D1_{z1}D2_{z2}O₄, wobei 0,9 ≤ x ≤ 1,1, 0,4 ≤ y ≤ 0,5, 0,005 ≤ z1 ≤ 0,2 und 0,0 ≤ z2 ≤ 0,2 ist, wobei D1 und D2 Dotierstoffe sind, gewählt aus den folgenden Elementen: Co, Cu, Ti, Zn, Mg, Fe oder Kombinationen davon, wobei D1 und D2 unterschiedliche Dotierstoffe sind, wobei das Lithiumpositivelektroden-Aktivmaterial aus Materialteilchen zusammengesetzt ist, wobei die Verteilung von Dotierstoff D1 entlang einer radialen Achse der Materialteilchen ungleichmäßig ist und wobei die Verteilung von Dotierstoff D2 entlang der radialen Achse der Materialteilchen gleichmäßig ist, wobei das Verfahren die Schritte umfasst:
a) Bereitstellen eines Lithiumpositivelektroden-Aktivmaterials, das mindestens 95 Gew.-% Spinell mit einer chemischen Zusammensetzung von LiₓNi_{y}Mn_{2-y-z1-z2}D1_{z1}D2_{z2}O₄, wobei 0,9 ≤ x ≤ 1,1, 0,4 ≤ y ≤ 0,5 und 0 ≤ z2 ≤ 0,2 ist,
b) Mischen des Lithiumpositivelektroden-Aktivmaterials aus Schritt a) mit einem Dotierstoffvorläufer des Dotierstoffs D1,
c) Erhitzen der Mischung aus Schritt b) auf eine Temperatur zwischen 300 °C und 700 °C.

20. Verfahren gemäß Anspruch 19, wobei die Temperatur von Schritt c) und die zeitliche Dauer von Schritt c) so gesteuert werden, dass eine gleichmäßige Verteilung des Dotierstoffs D1 in dem gesamten Lithiumpositivelektroden-Aktivmaterial verhindert wird.

21. Sekundärbatterie, umfassend eine positive Elektrode, die das Lithiumpositivelektroden-Aktivmaterial gemäß einem der Ansprüche 1 bis 18 umfasst.

## Revendications

1. Matériau actif d'électrode positive au lithium comprenant au moins 95 % en pds de spinelles ayant une composition chimique de LiₓNi_{y}Mn_{2-y-z1-z2}D1_{z1}D2_{z2}O₄, 0,9 ≤ x ≤ 1,1, 0,4 ≤ y ≤ 0,5, 0,005 ≤ z1 ≤ 0,2, 0 ≤ z2 ≤ 0,2, D1 étant un agent dopant choisi parmi les éléments suivants: Co, Cu, Ti, Zn, Mg, Fe ou leurs combinaisons, D2 étant un agent dopant choisi parmi Cu, Ti, Zn, Mg, Fe ou leurs combinaisons, où D1 et D2 sont des agents dopants différents, le matériau actif d'électrode positive au lithium étant une poudre composée de particules de matériau, la distribution de l'agent dopant D1 n'étant pas uniforme le long d'un axe radial des particules de matériau et la distribution de l'agent dopant D2 étant uniforme le long de l'axe radial des particules de matériau.

2. Matériau actif d'électrode positive au lithium selon la revendication 1, lesdites particules de matériau dudit matériau actif d'électrode positive au lithium étant des particules primaires, les particules primaires formant des particules secondaires, au moins 95 % des particules primaires présentant un diamètre ou un diamètre équivalent en volume compris entre 100 nm et 2 µm et où au moins 95 % des particules secondaires ont un diamètre ou un diamètre équivalent en volume compris entre 1 µm et 25 µm.

3. Matériau actif d'électrode positive au lithium selon la revendication 2, les particules primaires du matériau actif d'électrode positive au lithium étant modifiées en surface avec l'agent dopant D1.

4. Matériau actif d'électrode positive au lithium selon l'une quelconque des revendications 2 à 3, l'agent dopant D1 étant présent dans les 20 % les plus externes des particules primaires.

5. Matériau actif d'électrode positive au lithium selon l'une quelconque des revendications 2 à 4, l'agent dopant D1 faisant partie de la spinelle.

6. Matériau actif d'électrode positive au lithium selon la revendication 1, lesdites particules de matériau dudit matériau actif d'électrode positive au lithium étant des particules secondaires constituées de particules primaires, le diamètre ou le diamètre équivalent en volume des particules primaires étant compris entre 100 nm et 2 µm et où le diamètre ou le diamètre équivalent en volume des particules secondaires étant compris entre 1 µm et 25 µm.

7. Matériau actif d'électrode positive au lithium selon la revendication 6, les particules secondaires du matériau actif d'électrode positive au lithium étant modifiées en surface avec l'agent dopant D1.

8. Matériau actif d'électrode positive au lithium selon l'une quelconque des revendications 6 ou 7, l'agent dopant D1 étant présent dans les 20 % les plus externes des particules secondaires.

9. Matériau actif d'électrode positive au lithium selon l'une quelconque des revendications 6 à 8, l'agent dopant D1 faisant partie de la spinelle.

10. Matériau actif d'électrode positive au lithium selon l'une quelconque des revendications 1 à 9, l'état d'oxydation de l'agent dopant D1 étant supérieur à 2.

11. Matériau actif d'électrode positive au lithium selon l'une quelconque des revendications 1 à 10, ledit matériau actif d'électrode positive au lithium étant perturbé par des cations.

12. Matériau actif d'électrode positive au lithium selon l'une quelconque des revendications 1 à 11, ledit matériau actif d'électrode positive au lithium ayant une densité après tassement d'au moins 1,9 g/cm³.

13. Matériau actif d'électrode positive au lithium selon l'une quelconque des revendications 1 à 12, la surface spécifique B.E.T. des particules secondaires étant inférieure à 0,25 m²/g.

14. Matériau actif d'électrode positive au lithium selon l'une quelconque des revendications 2 à 13, les particules secondaires étant **caractérisées par** une circularité moyenne supérieure à 0,90 et simultanément un rapport d'aspect moyen inférieur à 1,50.

15. Matériau actif d'électrode positive au lithium selon l'une quelconque des revendications 2 à 14, la D₅₀ des particules secondaires étant comprise entre 3 et 50 µm, préférablement entre 8 et 40 µm.

16. Matériau actif d'électrode positive au lithium selon la revendication 15, la distribution de la taille des agglomérats des particules secondaires étant **caractérisée en ce que** le rapport entre les D90 et D10 est inférieur ou égal à 4.

17. Matériau actif d'électrode positive au lithium selon l'une quelconque des revendications 1 à 16, la capacité du matériau actif d'électrode positive au lithium étant supérieure à 120 mAh/g.

18. Matériau actif d'électrode positive au lithium selon l'une quelconque des revendications 1 à 17, la séparation entre les deux plateaux Ni autour de 4,7 V du matériau actif d'électrode positive au lithium étant au moins 50 mV.

19. Procédé de préparation d'un matériau actif d'électrode positive au lithium comprenant au moins 95 % en pds de spinelles ayant une composition chimique de LiₓNi_{y}Mn_{2-y-z1-z2}D1_{z1}D2_{z2}O₄, 0,9 ≤ x ≤ 1,1, 0,4 ≤ y ≤ 0,5, 0,005 ≤ z1 ≤ 0,2 et 0,0 ≤ z2 ≤ 0,2, D1 et D2 étant des agents dopants choisis parmi les éléments suivants : Co, Cu, Ti, Zn, Mg, Fe ou leurs combinaisons, où D1 et D2 sont des agents dopants différents, le matériau actif d'électrode positive au lithium étant composé de particules de matériau, la distribution de l'agent dopant D1 n'étant pas uniforme le long d'un axe radial des particules de matériau et la distribution de l'agent dopant D2 étant uniforme le long de l'axe radial des particules de matériau, ledit procédé comprenant les étapes de:
a) fourniture d'un matériau actif d'électrode positive au lithium comprenant au moins 95 % en pds de spinelles ayant une composition chimique de LiₓNi_{y}Mn_{2-y-z2}D2_{z2}O₄, où 0,9 ≤ x ≤ 1,1, 0,4 ≤ y ≤ 0,5, et 0 ≤ z2 ≤ 0,2,
b) mélange du matériau actif d'électrode positive au lithium de l'étape a) avec un précurseur dopant de l'agent dopant D1,
c) chauffage du mélange de l'étape b) à une température comprise entre 300°C et 700°C.

20. Procédé selon la revendication 19, la température de l'étape c) et la durée en temps de l'étape c) étant contrôlées afin d'empêcher la distribution uniforme de l'agent dopant D1 à travers le matériau d'électrode positive au lithium.

21. Batterie secondaire comprenant une électrode positive qui comprend le matériau actif d'électrode positive au lithium selon l'une quelconque des revendications 1 à 18.
